# EUROPÄISCHE PATENTSCHRIFT

(11) **EP 1 457 611 B1**
(45) Veröffentlichungstag und Bekanntmachung des Hinweises auf die Patenterteilung: **31.10.2007**
(21) Anmeldenummer: 04004638.5
(22) Anmeldetag: 01.03.2004
(51) Int. Cl.: E04B 1/80, E04B 1/86, B32B 5/18, B32B 5/24

(54) **Schall- und wärmedämmendes Konstruktionselement**
Sound and heat insulating building element
Elément de construction pour isolation thermique et acoustique

(30) Priorität: 13.03.2003 DE 10310907
(43) Veröffentlichungstag der Anmeldung: 15.09.2004
(73) Patentinhaber: Bayer MaterialScience AG, 51368 Leverkusen (DE)
(72) Erfinder: Dreier, Thorsten, Dr., 40545 Düsseldorf (DE)

(56) Entgegenhaltungen:
- WO-A-99/44816
- WO-A-02/083461
- DE-A1- 2 525 051
- DE-C1- 19 962 865
- US-A- 5 563 180

## Beschreibung

Die Erfindung betrifft ein Konstruktionselement aus geschlossenzelligem Polyurethanhartschaum, mit guter Wärmedämmung und erhöhter Schallabsorption.

In der Regel werden Polymerschaum-Platten, insbesondere auch Polyurethanhartschäume, vielfältig zur Gebäudeisolation eingesetzt. Im Bereich der Dachdämmung werden z.B. als Aufsparrendämmmaterialien Platten mit einer Dicke zwischen 40 und 180 mm verwendet. Hauptzweck dieser Platten ist, die Wärmeisolierung zu gewährleisten. Hierfür werden in der Regel Materialien mit einer Wärmeleitfähigkeit in einem Bereich von 20 bis 35 mW/mK eingesetzt. Bei Verwendung von flexiblen Deckschichten kann dieser Wert noch verbessert werden. Darüber hinaus ist eine Druckfestigkeit von mindestens 0,10 N/mm² zu erbringen, da bei der Verlegung dieser Platten die Tragfähigkeit für Dachdecker gewährleistet sein muss. Vorteilhaft wären Plattenmaterialien, die zusätzlich zur Wärmeisolierwirkung auch die Schalldämmung gegen Außenlärm gewährleisten, und zusätzlich auch die Schalllängsleitung zwischen den Räumen verhindern, insbesondere in einem Frequenzbereich von 1000 Hz bis 5000 Hz.

In DE-A 199 62 865 sind oberflächenverdichtete Polyurethanschaum-Formteile mit einer Perforation beschrieben, wie sie für die Gehäuseisolation von Apparaturen eingesetzt werden. Eine Schallabsorption wird dadurch erreicht, dass die verhauteten Schäume oberflächennah eingestochen werden und somit die Schallwellen in den Schaum eindringen können. Nachteilig ist allerdings, dass die dort beschriebenen Schaumstoffe weder ausreichende Druckfestigkeiten noch wärmeisolierende Eigenschaften aufweisen.

Es wurde nun gefunden, dass die Schallabsorptionswirkung eines geschlossenzelligen Polyurethanhartschaumes, der üblicherweise keinen Schallschutz garantiert, im Frequenzbereich von 1000 bis 5000 Hz erheblich verbessert werden kann, wenn die Oberfläche Vertiefungen mit unterschiedlichen Abmessungen aufweist. Durch diese Perforation ändern sich die guten wärmedämmenden Eigenschaften der geschlossenzelligen Polyurethanschäume nur geringfügig.

Gegenstand der vorliegenden Erfindung ist ein schall- und wärmedämmendes Element, enthaltend eine Platte aus PU-Hartschaum mit einem Anteil geschlossener Zellen von mehr als 90 %, dessen Oberfläche pro cm² 1 bis 18 Vertiefungen mit einen Durchmesser von 0,1 bis 10 mm und einer Tiefe von 1 bis 7 cm aufweist, wobei mindestens zwei Arten von Vertiefungen vorhanden sind, die sich in mindestens einer Abmessung unterscheiden.

Die Oberfläche des Elements weist Vertiefungen von 0,1 bis 10 mm Durchmesser, besonders bevorzugt 0,2 bis 4 mm Durchmesser auf. Die Vertiefungen können kreisförmig, oval, kreuz- oder schlitzförmig sein und es können Kombinationen verschiedener Formen eingesetzt werden. Die Tiefe der Vertiefungen beträgt 0,1 bis 7 cm, vorzugsweise 1 bis 4 cm, und ist kleiner als die Dicke der Platte. Bevorzugt beträgt die Differenz mindestens 5 mm. Die Anzahl der Vertiefungen einer Oberfläche des Elements beträgt 1 bis 18 pro cm², bevorzugt 4 bis 15 pro cm². Das Element kann auf der Vorder- oder Rückseite oder auf beiden Seiten Vertiefungen aufweisen.

Es wurde zudem gefunden, dass die Verwendung von Deckschichten eine Erhöhung der schallabsorbierenden Eigenschaften des erfindungsgemäßen Elements zur Folge hat. Dabei kann entweder nur eine Seite der PU-Hartschaumplatte des Elements mit einer Deckschicht versehen sein oder beide Seiten. Vorder- und Rückseite können mit gleichen oder unterschiedlichen Deckschichten ausgestattet sein. Bevorzugt werden als Deckschicht Mineralvliese mit Rohdichten von 40 bis 80 kg/m³ eingesetzt. Es können als Deckschicht aber auch Natronkraftpapier, bitumiertes Papier, Bitumenpappe, Krepppapier, PE-beschichtete Glasvliese und Aluminiumfolien verwendet werden. Die Dicke der verwendeten Deckschichten beträgt je nach Material 0,03 mm (z.B. für Aluminiumfolie) bis 3 mm (z.B. Bitumenpappe). Weitere Deckschichten sind beschrieben in G. Oertel (Hrsg.): "Polyurethane", 3. Aufl., Carl Hanser Vlg., München 1993, S. 272 ff. In einer bevorzugten Ausführungsform weist das Element auf der schallzugewandten Vorderseite eine Deckschicht aus Mineralvlies und auf der schallabgewandten Rückseite eine Deckschicht aus Aluminiumfolie auf.

Als Polyurethan-Hartschaumstoffe werden geschlossenzellige Systeme mit einer Dichte zwischen 20 und 120 kg/m³, bevorzugt 20 bis 80 kg/m³, besonders bevorzugt 25 bis 40 kg/m³, eingesetzt. Die Polyurethan-Hartschäume werden mit einem Index (molares Verhältnis von Isocyanatgruppen zu Isocyanat-reaktiven Gruppen multipliziert mit 100) zwischen 100 und 600, bevorzugt 100 bis 400 verschäumt.

Die in den erfindungsgemäßen Elementen eingesetzten Platten werden nach dem dem Fachmann im Prinzip bekannten Verfahren hergestellt. Wenn eine Deckschicht Verwendung findet, wird diese bevorzugt direkt bei der Herstellung des Schaumes mit angeschäumt, z.B. bei der Herstellung von Platten mit dem Doppeltransportband. Die Vertiefungen werden durch gängige mechanische Verfahren z.B. Bohren, Fräsen etc. in den Schaum eingebracht.

### Beispiele

Es wurde ein Polyurethanhartschaumstoff hergestellt durch Umsetzung
- 64 GT: eines Polyesterpolyols auf Basis Adipinsäure, Phthalsäureanhydrid und Diethylenglycol, OH-Zahl 210 (Desmophen® DE S-053, Bayer AG);
- 16 GT: eines Polyetherpolyols der OH-Zahl 255, hergestellt durch Umsetzung von Trimethylolpropan mit einer Mischung aus Ethylenoxid und Propylenoxid (Desmophen® VP.PU 1657, Bayer AG);
- 160 GT: eines Gemischs von MDI-Isomeren und deren höheren Homologen (Desmodur® 44V20, Bayer AG).
in Gegenwart von
- 16 GT: Trichlorpropylphosphat (als Flammschutzmittel);
- 13,2 GT: n-Pentan
- 1,2 GT: Wasser;
- 1,6 GT: eines handelsüblichen Polyether-Polysiloxan-Schaumstabilisators (Dabco® DC5598, Air Products);
- 3,6 GT: einer 25%igen Kaliumacetat-Lösung in Diethylenglycol;
- 0,56 GT: Dimethylcyclohexylamin.

Es wurde ein Polyurethan-Hartschaum (Kennzahl 236) mit einer Dichte von 30 kg/m³ und einer Offenzelligkeit von 10 Vol-% erhalten. Die Wärmeleitzahl nach DIN 52616 betrug 25,8 mW/mK (23°C).

### Beispiel 1 (Vergleich)

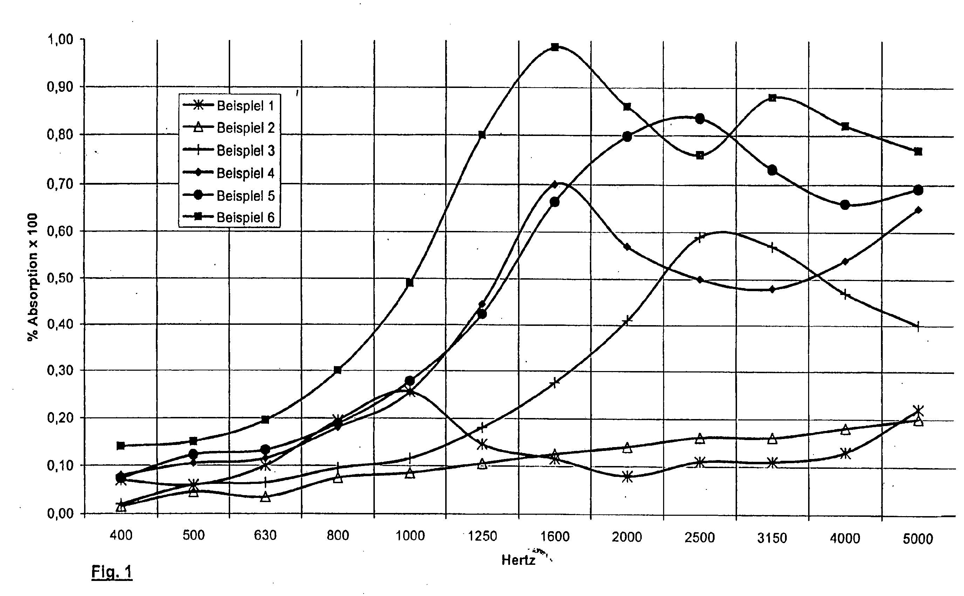

Aus diesem Hartschaum wurde ein ebenes Formteil mit einer Dicke von 40 mm, Länge 200 mm und Breite 200 mm geschnitten. Die frequenzabhängige Schallabsorption wurde nach ASTM E 1050-90 in einem Schallabsorptionsrohr von 30 und 90 mm Durchmesser gemessen. Fig. 1 zeigt die Schallabsorption der Probe. Die Wärmeleitzahl betrug 25,8 mW/mK.

### Beispiel 2 (Vergleich)

Eine Oberfläche eines nach Beispiel 1 hergestellten Probekörpers wurde mit zylindrischen Vertiefungen von 2 mm Durchmesser und 15 mm Tiefe versehen, wobei deren Anzahl 5/cm² betrug. Fig. 1 zeigt die Schallabsorption der Probe. Die Wärmeleitzahl betrug 26,3 mW/mK.

### Beispiel 3 (Vergleich)

Eine Oberfläche eines nach Beispiel 1 hergestellten Probekörpers wurde mit zylindrischen Vertiefungen von 4 mm Durchmesser und 20 mm Tiefe versehen, wobei deren Anzahl 5/cm² betrug. Fig. 1 zeigt die Schallabsorption der Probe. Die Wärmeleitzahl betrug 28,0 mW/mK.

### Beispiel 4

Eine Oberfläche eines nach Beispiel 1 hergestellten Probekörpers wurde mit zylindrischen Vertiefungen von 2 mm Durchmesser und 15 mm Tiefe (1/cm²), mit zylindrischen Vertiefungen von 4 mm Durchmesser und 20 mm Tiefe (2/cm²), sowie mit zylindrischen Vertiefungen von 4 mm Durchmesser und 30 mm Tiefe (2/cm²) versehen. Fig. 1 zeigt die Schallabsorption der Probe. Die Wärmeleitzahl betrug 29,4 mW/mK.

### Beispiel 5

Ein nach Beispiel 1 hergestellter Probekörper wurde einseitig (schallzugewandte Seite) mit einer handelsüblichen Vliepatex® -Oberfläche (mineralisch beschichtetes Glasvlies mit Flächengewicht 50 g/m²) versehen. Anschließend wurden in die Oberfläche zylindrische Vertiefungen von 2 mm Durchmesser und 15 mm Tiefe (1/cm²), zylindrische Vertiefungen von 4 mm Durchmesser und 20 mm Tiefe (2/cm²), sowie zylindrische Vertiefungen von 4 mm Durchmesser und 30 mm Tiefe (2/cm²) gebohrt. Fig. 1 zeigt die Schallabsorption der Probe. Die Wärmeleitzahl betrug 30,7 mW/mK.

### Beispiel 6

Ein analog Beispiel 1 hergestellter Probekörper mit einer Dicke von 50 mm wurde einseitig (schallzugewandte Seite) mit einer handelsüblichen Vliepatex® -Oberfläche (mineralisch beschichtetes Glasvlies mit Flächengewicht 50 g/m²) versehen. Anschließend wurden in die Oberfläche zylindrische Vertiefungen von 4 mm Durchmesser und 20 mm Tiefe (1/cm²), zylindrische Vertiefungen von 4 mm Durchmesser und 30 mm Tiefe (2/cm²), sowie zylindrische Vertiefungen von 4 mm Durchmesser und 40 mm Tiefe (2/cm²). Fig. 1 zeigt die Schallabsorption der Probe. Die Wärmeleitzahl betrug 32,2 mW/mK.

## Patentansprüche

1. Schall- und wärmedämmendes Element, enthaltend eine Platte aus Polyurethan-Hartschaum mit einem Anteil geschlossener Zellen von mehr als 90 %, dessen Oberfläche pro cm² 1 bis 18 Vertiefungen mit einen Durchmesser von 0,1 bis 10 mm und einer Tiefe von 10 bis 70 mm aufweist, wobei mindestens zwei Arten von Vertiefungen vorhanden sind, die sich in mindestens einer Abmessung unterscheiden.

2. Element gemäß Anspruch 1, bei dem sowohl Vorder- wie Rückseite Vertiefungen aufweisen.

3. Element gemäß Anspruch 1 oder 2, bei dem die Platte aus Polyurethan-Hartschaum auf der Vorder- oder Rückseite mit einer Deckschicht versehen ist.

4. Element gemäß Anspruch 3, bei dem die Deckschicht eine Aluminiumfolie oder ein Mineralfaservlies enthält.

5. Element gemäß Anspruch 3 oder 4, bei dem die Platte aus geschlossenzelligem Polyurethan-Hartschaum auf der Vorder- und Rückseite mit einer Deckschicht versehen ist.

6. Element gemäß Anspruch 5, bei dem die Deckschicht auf der Vorderseite aus einem anderen Material als die Deckschicht auf der Rückseite besteht.

## Claims

1. Soundproofing and thermally insulating element containing a panel of polyurethane rigid foam with a proportion of closed cells of more than 90%, whose surface has per cm² 1 to 18 depressions of diameter from 0.1 to 10 mm and of depth from 10 to 70 mm, wherein at least two types of depressions are present that differ in at least one dimension.

2. Element according to claim 1, in which both the front and rear sides have depressions.

3. Element according to claim 1 or 2, in which the panel of polyurethane rigid foam is provided with an outer layer on the front or rear side.

4. Element according to claim 3, in which the outer layer contains an aluminium foil or a mineral fibre fleece.

5. Element according to claim 3 or 4, in which the panel of closed-cell polyurethane rigid foam is provided with an outer layer on the front and rear sides.

6. Element according to claim 5, in which the outer layer on the front side consists of a different material to the outer layer on the rear side.

## Revendications

1. Elément isolant du son et de la chaleur, contenant une plaque de mousse rigide de polyuréthanne à plus de 90 % de cellules fermées dont la surface porte, par cm², 1 à 18 creux d'un diamètre de 0,1 à 10 mm et d'une profondeur de 10 à 70 mm, avec au moins deux types de creux qui diffèrent entre eux par au moins une dimension.

2. Elément selon la revendication 1, portant des creux sur la face antérieure comme sur la face postérieure.

3. Elément selon la revendication 1 ou 2 dans lequel la plaque de mousse rigide de polyuréthanne porte une couche de couverture sur la face antérieure ou sur la face postérieure.

4. Elément selon la revendication 3 dans lequel la couche de couverture contient une feuille d'aluminium ou une nappe de fibres minérales.

5. Elément selon la revendication 3 ou 4, dans lequel la plaque de mousse rigide de polyuréthanne à cellules fermées porte une couche de couverture sur la face antérieure et sur la face postérieure.

6. Elément selon la revendication 5 dans lequel la couche de couverture de la face antérieure consiste en une matière autre que celle de la couche de couverture de la face postérieure.
